# EUROPEAN PATENT SPECIFICATION

(11) **EP 2 399 803 B1**
(45) Date of publication and mention of the grant of the patent: **09.10.2013**
(21) Application number: 11178858.4
(22) Date of filing: 20.07.2007
(51) Int. Cl.: B62B 3/06, B62B 3/12, B62D 49/06, A61G 7/08

(54) **Lift truck**
Gabelstapler
Chariot élévateur

(30) Priority: 28.07.2006 IT BO20060570
(43) Date of publication of application: 28.12.2011
(62) Divisional of application: 07112815.1
(73) Proprietor: E' COSI' S.R.L., 47100 Forli, Località Villa Selva (FC) (IT); Formula Servizi Società Cooperativa, 47100 Forlì (IT)
(72) Inventor: Oltrecolli, Maurizio, 48010 COTIGNOLA (RA) (IT); Cavini, Renzo, 48018 FAENZA (RA) (IT); Rinaldini, Graziano, 47034 FORLIMPOPOLI (FO) (IT)
(74) Representative: Modiano, Micaela Nadia

(56) References cited:
- EP-A- 0 466 065
- EP-A- 1 439 107
- EP-A- 1 486 393
- EP-A- 1 506 902
- EP-A- 1 516 796
- WO-A-03/014001
- DE-A1- 2 450 692
- DE-A1- 19 717 375
- DE-A1- 19 723 973
- DE-A1- 19 817 033
- FR-A- 1 365 714
- GB-A- 2 419 856
- US-A- 2 598 151
- US-A- 4 884 936
- US-A1- 2005 016 782
- US-A1- 2005 189 730

## Description

The present invention relates to a lift truck which has particular mobility and versatility.

The need to transport goods and/or various items (including furniture) over short distances has made it necessary to use devices known as lift trucks or more generally as transpallets.

The term "pallet" in fact designates a particular platform, generally made of wood, which has particular openings which are suitable for mating with the front forks of lift trucks.

The limitation of lift trucks is that they require relatively large maneuvering spaces, due to the fact that their steered wheel is arranged at one end of the truck: the minimum turning radius that can be provided by a traditional truck is equal to the center distance between the steered wheel and the fixed free wheels (arranged at the opposite end of the truck): this minimum turning radius is obtained only by arranging the steered wheel so that its direction of motion is at 90° with respect to the free wheels, leading to an obvious poor maneuverability of the vehicle.

In practice, the length of the truck often coincides with the minimum turning radius that can be provided during maneuvers.

A field in which a lift truck finds an important and interesting application is the hospital and/or hospital-related field (rehabilitation centers, spas, health care centers, homes, et cetera): in such cases it is in fact necessary to move the beds, often with the patients on them, while passing through narrow corridors and furnished rooms.

Hospital beds usually have supporting wheels to allow their easy movement: in particular, the wheels are all casters and can be locked in order to ensure maximum ease of use.

To move the beds, the standard practice is to assign two people (one at the bedhead and the other one generally at the opposite end) who guide the bed along the path that it must follow. In this manner, maneuvering problems are minimized (all the wheels are casters), but the operating costs are extremely high, since two people are required for every movement.

Of course, these problems occur in a similar manner, and are solved by the present invention, whenever it is necessary to transport pieces of furniture provided with wheels (office furniture, exhibition furnishings, etcetera) in spaces which have tight maneuvering spaces.

EP-A-0 466 065 discloses a conventional transpallet device as defined in the pre-characterizing portion of the appended claim 1.

EP-A-1 506 902 discloses a pedestrian operated powered load transport assembly for towing large heavy items such as for example articulated lorry trailers, including a main body supporting a pair of ground stabilising wheels mounted on the rear of the body, and a main support wheel assembly mounted on the frount region of the body and driven by a drive means mounted on the body.

GB-A-2 419 856 discloses a chassis having ground engaging members enabling the chassis to move across the floor. The ground engaging members include a driven wheel mounted at one end of a lower base of the chassis and a pair of jockey wheels mounted at an opposite end of the lower base of the chassis for 360° rotation about a vertical axis. The chassis includes a rectangular support frame operatively connected to the base by an elevation scissor jack arrangement. The rectangular frame may support a plurality of rollers to enable an elongate body tray to be slid in its longitudinal direction onto and off the rectangular frame by an operative pushing the tray using handles located at each end of the tray thereby making the chassis suitable for use as a mortuary trolley. A stop removable hook member may be provided to engage the handle to retain the tray against longitudinal movement. Alternatively the rectangular frame may support cross members to carry a mattress.

The aim of the present invention is to provide a lift truck with a tight turning radius and with high maneuverability.

Within this aim, an object of the present invention is to provide a lift truck with a variable turning radius.

Another object of the present invention is to provide a lift truck which is flexible in terms of use, since it is adapted to be used with different load supporting structures and therefore is not necessarily integrated with the element that needs to be transported.

Another object of the present invention is to provide a lift truck which is suitable for transporting beds and other pieces of furniture, optionally provided with wheels, and is adapted to work with small maneuvering spaces.

Another object of the present invention is to provide a lift truck which has a low cost and is relatively simple to provide in practice and safe in application.

This aim and these and other objects which will become better apparent hereinafter are achieved by the present lift truck for hospital beds as defined in claim 1.

Further characteristics and advantages of the invention will become better apparent from the following detailed description of a preferred but not exclusive embodiment of a lift truck, illustrated by way of non-limiting example in the accompanying drawings, wherein:

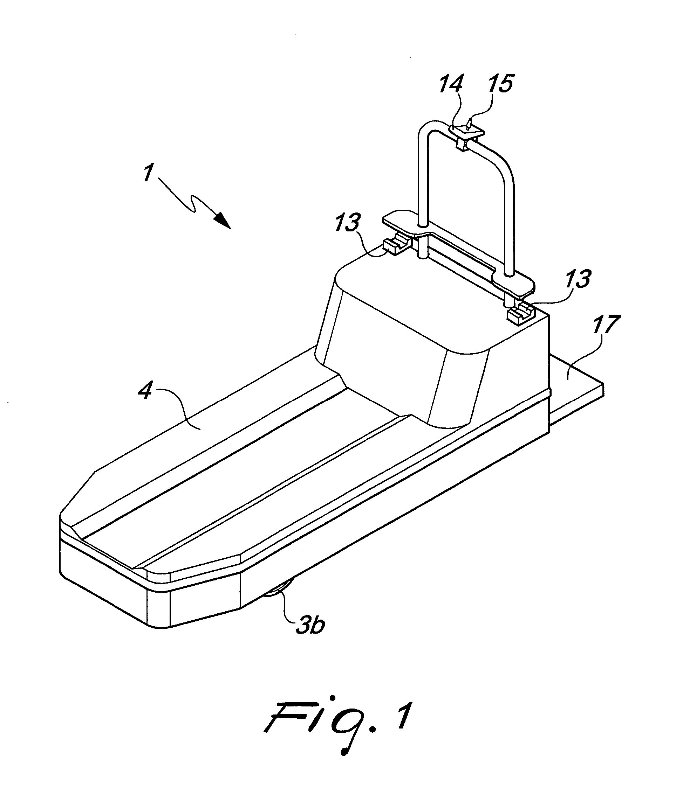

Figure 1 is a perspective view of a lift truck according to the invention;

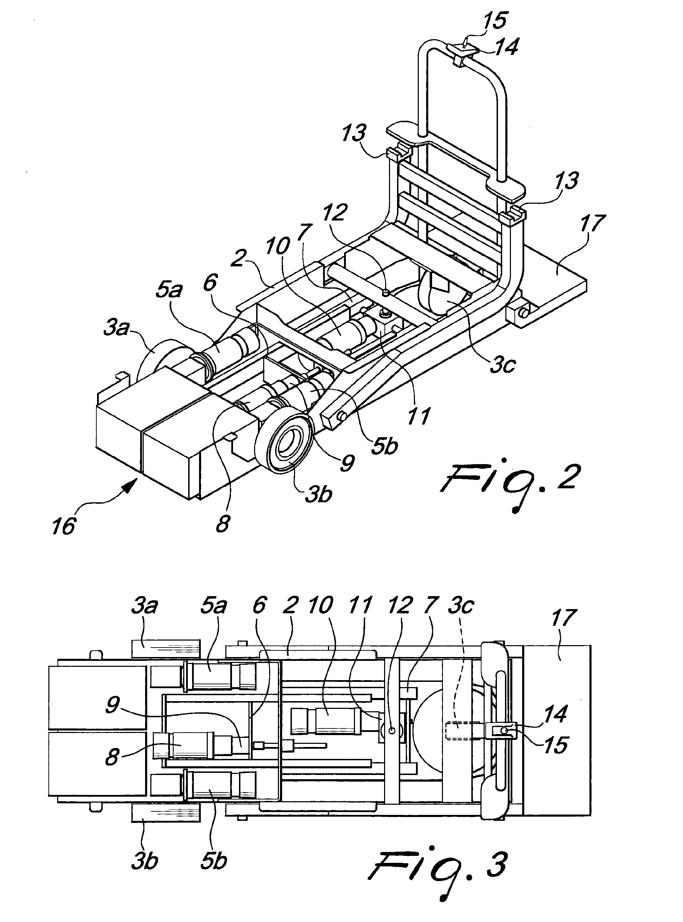

Figure 2 is a perspective view of the lift truck according to the invention, without the external housings for covering and protection;
Figure 3 is a top view of the lift truck according to the invention, without the external housings for covering and protection.

With reference to the figures, the reference numeral 1 generally designates a lift truck.

The truck 1 comprises a chassis 2 which rests on wheels 3a, 3b and 3c (in the embodiment shown in the figures, the wheels are three, but they might also be more than three in order to ensure greater stability of the entire truck 1) and a platform 4 which can perform a vertical translational motion with respect to the chassis 2.

The wheel 3c is free and is arranged proximate to an end of the chassis 2, while the other two wheels 3a and 3b are each controlled by a respective independent motor element 5a and 5b.

In particular, the wheels 3a and 3b are parallel and proximate to each other at the sides of the chassis 2: according to the embodiment shown in the figures, the wheels 3a and 3b are surmounted by the platform 4.

The motorized wheels 3a and 3b and the respective motor elements 5a and 5b are stably associated with a slider 6, which is engaged slidingly in appropriately provided guiding abutments 7 of the chassis 2: the abutments 7 and the stroke of the slider 6 are mutually parallel and longitudinal with respect to the direction of the extension of the truck 1. A motor 8 and respective motion transmission means 9 (gears, speed reduction units, and the like) are mounted on the chassis 2 in functional association with the slider 6, for its controlled longitudinal translational motion along the guiding abutments 7.

The vertically translating platform 4 is moved by means of an appropriate electric motor 10, on which a suitable actuator 11 is keyed; according to a particular embodiment, the actuator 11 can be provided as an element which is designed to convert the rotary motion of the motor shaft into a translational motion of a shaft 12 with which the platform 4 is associated. According to a particular embodiment (not shown in the figures), the platform can be arranged exclusively proximate to the end of the chassis 2 that comprises the free wheel 3c: in this case, the platform 4 is extremely small and comprises support and engagement elements which are stably associable with one or more mutually different structures designed to carry the load, for example with tubular elements, even of different sizes, which are typical of bedheads.

According to the embodiment shown in the figures (which is more generic), the platform 4 runs along the entire surface of the truck 1 and has suitable support and engagement elements 13 proximate to the end of the chassis 2 that comprises the free wheel 3c.

According to an application of particular interest in practice and in application, the support and engagement elements 13 can be associated with a portion of the head of a hospital bed: in this case, the truck 1 can be used to move the bed rigidly coupled to the engagement elements 13.

The operator, after coupling the bed to the elements 13, can in fact transport the bed by using the propulsion action of the truck 1.

In order to optimize ease of use, the truck 1 comprises a control and management unit 14, which is designed to control the motors 5a, 5b, 8 and 10: the unit 14 is provided with respective levers 15 for controlling motion (in particular handling forward travel, backward travel and the stopping of all the motors 5a, 5b, 8 and 10) and the direction of motion (in particular defining the speed of each of the motors 5a and 5b, determining the leftward and rightward direction of the motion of the truck 1). The independent motorization of the wheels 3a and 3b in fact ensures that their rotation at different speeds (or even in mutually opposite directions) is converted into rotations of the truck 1, in an extreme case even in place (the two wheels 3a and 3b turn in opposite directions and determine the center of rotation at the midpoint of their center distance).

In the more general case, a steering maneuver of the vehicle is obtained by making the two driving wheels move with speeds which are parallel in their direction, have matching or opposite orientations, and have a different absolute value; the turning radius and the momentary center of rotation of the vehicle are determined by the value of the rotation rate of the individual wheels. The control system of the vehicle, provided with a control logic unit, is capable of calculating and optimizing motion as a function of the received command and of the application.

Further, the variation of the position of the axis of the wheels 3a and 3b, which can be optionally controlled by the control unit 14 (and can be obtained by means of the translational motion of the slider 7 on the abutments 7 by way of the action of the respective motor 8) allows to arrange said axis in the most convenient position to ensure that the loaded truck 1 can turn in place even in very tight spaces.

According to embodiments of particular practical interest, the control unit 14 can comprise a first assembly, which is rigidly coupled to the chassis 2 and is provided with a signal receiver, and a second portable assembly, which is provided with the control levers 15 and is equipped with a signal transmitter which is associated with the receiver: in this manner, the truck could be controlled remotely, with the advantage of eliminating the space occupied by the operator and facilitating the execution of maneuvers in particularly tight spaces.

For the operation and power supply of its components, the truck 1 comprises a battery assembly 16: in the embodiment shown in the figures, the assembly 16 is arranged in a cantilever fashion in the portion beyond the motorized wheels 3a and 3b in order to use their weight to give grip to the wheels 3a and 3b and stability to the entire truck 1. As an alternative, it is possible to provide suitable stabilizing counterweights, not shown in the figures.

In order to comply with applicable statutory provisions regarding safety, the truck 1 can comprise acoustic and luminous motion indicators: these accessories are particularly important in all environments in which there are also uninformed people in addition to operators (for example hospitals),

To facilitate use by the operator, the truck 1 also comprises an end ledge 17 for accommodating the operator.

It has thus been shown that the invention achieves the intended aim and objects.

The invention thus conceived is susceptible of numerous modifications and variations within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting affect on the interpretation of each element identified by way of example by such reference signs.

## Claims

1. A lift truck for supporting a hospital bed, said lift truck comprising a chassis (2) which rests on at least three wheels (3a, 3b, 3c), a platform (4) which can perform a vertical translational motion with respect to said chassis (2), at least one respective element for moving one of said wheels (3a, 3b, 3c), and an end ledge (17) for accommodating an operator, **characterized in that** at least one of said wheels (3c) being free and arranged proximate to an end of said chassis (2) and two of said wheels (3a, 3b) being each controlled by a respective independent motor element (5a, 5b) and being mutually parallel and proximate to each other, said platform (4) lying above said motorized wheels (3a, 3b), said vertically movable platform (4) being arranged exclusively proximate to the end of said chassis (2) which comprises the at least one said free wheel (3c) or the platform (4) extending along the entire surface of the lift truck (1), the platform (4) having suitable support and engagement elements (13) arranged proximate to the end of the chassis (2) that comprises the at least one free wheel (3c), said support and engagement elements (13) being adapted to be rigidly connected with a portion of a head of the hospital bed, thereby said lift truck (1) being adapted to move said bed when being rigidly coupled to said support and engagement elements (13).

2. The lift truck according to claim 1, **characterized in that** said motorized wheels (3a, 3b) and the respective motor elements (5a, 5b) are stably associated with a slider (6) which is engaged slidingly in appropriately provided guiding abutments (7) of said chassis (2), said abutments (7) and the stroke of said slider (6) being parallel and longitudinal with respect to the longitudinal direction of said lift truck (1).

3. The lift truck according to claim 2, **characterized in that** it comprises a motor (8) and respective motion transmission means (9), which are associated with said slider (6) for its controlled longitudinal translational motion along said guiding abutments (7).

4. The lift truck according to one or more or the preceding claims, **characterized in that** it comprises a control and management unit (14) which is designed to control said motors (5a, 5b, 8), said control and management unit (14) being provided with respective levers (15) for controlling motion, forward travel, backward travel and stopping, and the direction of motion, leftward and rightward direction.

5. The lift truck according to claim 4, **characterized in that** said control and management unit (14) comprises a first assembly, which is rigidly coupled to said chassis (2) and is provided with a signal receiver, and a second portable assembly, which is provided with said control levers (15) and with a signal transmitter which is associated with said receiver.

6. The lift truck according to one or more of the preceding claims, **characterized in that** it comprises at least one battery (16), which is arranged so as to cantilever out in the portion beyond said motorized wheels (3a, 3b) its weight giving grip to said wheels (3a, 3b) and stability to said truck (1).

7. The lift truck according to one or more of the preceding claims, characterize in that it comprises acoustic and luminous motion indicators.

## Patentansprüche

1. Ein Krankenhausbett tragender Hubwagen, umfassend ein Chassis (2), welches auf mindestens drei Rädern (3a, 3b, 3c) gelagert ist, eine Plattform (4), welche eine vertikale Translationsbewegung mit Bezug auf das Chassis (2) ausführen kann, mindestens ein Element für die Bewegung eines der Räder (3a, 3b, 3c) und eine vorstehende Leiste(17) für die Aufnahme einer Bedienungsperson, **dadurch gekennzeichnet, dass** mindestens eines der Räder (3c) frei und nahe einem Ende des Chassis (2) ange-ordnet ist und zwei der Räder (3a, 3b) jeweils durch ein unabhängiges Motorelement (5a, 5b) bewegt werden und zueinander parallel und benachbart sind, wobei die Plattform (4) oberhalb der motorgetriebenen Räder (3a, 3b) liegt, wobei die vertikal bewegbare Plattform (4) ausschließlich dem Ende des Chassis (2) benachbart ist, welches das mindestens eine freie Rad (3c) umfasst, oder die Plattform (4) erstreckt sich entlang der vollständigen Fläche des Hubwagens (1), wobei die Plattform (4) geeignete Träger und Eingriffselemente (13) besitzt, die dem Ende des Chassis (2) benachbart angeordnet sind, das das mindestens eine freie Rad (3c) umfasst, wobei die Träger und Eingriffselemente (13) angepasst sind um fest mit einem Kopfteil des Krankenhausbetts verbunden zu werden, wodurch der Hubwagen (1) befähigt ist, das Bett zu bewegen, wenn es fest mit dem Träger und Eingriffselementen (13) gekuppelt ist.

2. Hubwagen nach Anspruch 1, **dadurch gekennzeichnet, dass** die motorgetriebenen Räder (3a, 3b) und die jeweiligen Motorelemente (5a, 5b) mit einem Schieber (6) fest verbunden sind, welcher gleitbar mit zugehörig vorgesehenen Führungsauflagern (7) des Chassis (2) im Eingriff steht, wobei die Auflager (7) und der Hub des Schiebers (6) parallel und längsgerichtet bezüglich der Längsrichtung des Hubwagens (1) sind.

3. Hubwagen nach Anspruch 2, **dadurch gekennzeichnet, dass** er einen Motor (8) und Bewegungsübertragungsmittel (9) enthält, welche mit dem Schieber (6) für dessen gesteuerte longitudinale Translationsbewegung entlang der Führungsauflager (7) verbunden sind.

4. Hubwagen nach einem oder mehreren der vorangehenden Ansprüche, **dadurch gekennzeichnet, dass** er eine Steuerungs- und Betriebseinheit (14) enthält, welche zur Steuerung der Motoren (5a, 5b, 8) ausgebildet ist, wobei die Steuerungs- und Betriebseinheit (14) mit entsprechenden Bedienungshebeln (15) für die Steuerung der Bewegung, Vorwärtsbewegung, Rückwärtsbewegung und Anhalten und die Richtung der Bewegung nach links und rechts versehen ist.

5. Hubwagen nach Anspruch 4, **dadurch gekennzeichnet, dass** die Steuerungs- und Betriebseinheit (14) eine erste Baugruppe enthält, welche fest an das Chassis (2) angeschlossen ist und mit einem Signalempfänger versehen ist, und eine zweite bewegliche Baugruppe, welche mit den Bedienungshebeln (15) und mit einem Signaltransmitter versehen ist, welcher mit dem Empfänger verbunden ist.

6. Hubwagen nach einem oder mehreren der vorangehenden Ansprüche, **dadurch gekennzeichnet, dass** er mindestens eine Batterie (16) enthält, welche so angeordnet ist, dass sie über den Bereich der motorgetriebenen Räder (3a, 3b) hinaus auskragend ihr Gewicht den Rädern (3a, 3b) Griff und dem Wagen (1) Stabilität gibt.

7. Hubwagen nach einem oder mehreren der vorangehenden Ansprüche, **dadurch gekennzeichnet, dass** er akustische und leuchtende Bewegungsindikatoren enthält.

## Revendications

1. Chariot élévateur destiné à supporter un lit d'hôpital, ledit chariot élévateur comprenant un châssis (2) qui repose sur au moins trois roues (3a, 3b, 3c), une plate-forme (4) qui peut effectuer un mouvement de translation vertical par rapport audit châssis (2), au moins un élément respectif entraînant une desdites roues (3a, 3b, 3c), et un marchepied (17) accueillant un opérateur à l'extrémité, **caractérisé en ce qu'**au moins une desdites roues (3c) est libre et disposée à proximité d'une extrémité dudit châssis (2) et deux desdites roues (3a, 3b) sont commandées respectivement par un élément moteur indépendant (5a, 5b), mutuellement parallèles et à proximité l'une de l'autre, que ladite plate-forme (4) repose au-dessus desdites roues motorisées (3a, 3b), que ladite plate-forme déplaçable verticalement (4) est disposée exclusivement à proximité de l'extrémité dudit châssis (2) comprenant ladite au moins une roue libre (3c) ou que la plate-forme (4) s'étend le long de toute la surface du chariot élévateur (1), la plate-forme (4) présentant des éléments de support et d'engagement (13) appropriés disposés à proximité de l'extrémité du châssis (2) comprenant l'au moins une roue libre (3c), lesdits éléments de support et d'engagement (13) étant adaptés à être reliés de façon rigide à une portion d'une tête d'un lit d'hôpital, ce qui permet audit chariot élévateur (1) de déplacer ledit lit lorsqu'il est couplé de façon rigide auxdits éléments de support et d'engagement (13).

2. Chariot élévateur suivant la revendication 1, **caractérisé en ce que** lesdites roues motorisées (3a, 3b) et les éléments moteurs respectifs (5a, 5b) sont associés de façon stable à un coulisseau (6), qui est engagé de façon coulissante dans des butées de guidage (7), prévues de façon appropriée, dudit châssis (2), lesdites butées (7) et la course dudit coulisseau (6) étant parallèles et longitudinales par rapport au sens de la longueur dudit chariot élévateur (1).

3. Chariot élévateur suivant la revendication 2, **caractérisé en ce qu'**il comprend un moteur (8) et des moyens respectifs de transmission du mouvement (9), qui sont associés audit coulisseau (6) pour son mouvement de translation longitudinal commandé le long desdites butées de guidage (7).

4. Chariot élévateur suivant une ou plusieurs des revendications précédentes, **caractérisé en ce qu'**il comprend une unité de commande et de gestion (14) qui est destinée à commander lesdits moteurs (5a, 5b, 8), ladite unité de commande et de gestion (14) étant munie de leviers respectifs (15) pour commander le mouvement, à savoir, la marche avant, la marche arrière et l'arrêt et le sens du mouvement, à savoir vers la gauche et vers la droite.

5. Chariot élévateur suivant la revendication 4, **caractérisé en ce que** ladite unité de commande et de gestion (14) comprend un premier ensemble qui est couplé de façon rigide audit châssis (2) et muni d'un récepteur de signal, ainsi qu'un second ensemble portable qui est muni desdits leviers de commande (15) et d'un transmetteur de signal qui est associé audit récepteur.

6. Chariot élévateur suivant une ou plusieurs des revendications précédentes, **caractérisé en ce qu'**il comprend au moins une batterie (16) qui est disposée en porte-à-faux dans la portion au-delà des roues motorisées (3a, 3b), son poids offrant de l'adhérence auxdites roues (3a, 3b) et de la stabilité audit chariot élévateur (1).

7. Chariot élévateur suivant une ou plusieurs des revendications précédentes, **caractérisé en ce qu'**il comprend des indicateurs de mouvement acoustique et lumineux.
